(19) Europäisches Patentamt
European Patent Office
Office européen des brevets

(11) **EP 0 605 322 B1**

(12) **FASCICULE DE BREVET EUROPEEN**

(45) Date de publication et mention
de la délivrance du brevet:
**08.07.1998 Bulletin 1998/28**

(51) Int Cl.6: **C10G 7/00**, B01D 1/06,
B01D 3/06, C10G 5/06

(21) Numéro de dépôt: **93403192.3**

(22) Date de dépôt: **28.12.1993**

(54) **Procédé de déshydratation et/ou dessalage et de fractionnement simultané d'un effluent de gisement pétrolier**

Verfahren zum Entwässern und/oder Entsalzen und gleichzeitiger Fraktionierung von einem Produktstrom eines Ölgewinnungsfeldes

Process for the dehydration and/or desalinization and simultaneous fractioning of a petroleum oilfild effluent

(84) Etats contractants désignés:
DK GB IT NL

(30) Priorité: **30.12.1992 FR 9216032**

(43) Date de publication de la demande:
**06.07.1994 Bulletin 1994/27**

(73) Titulaire: **INSTITUT FRANCAIS DU PETROLE
92502 Rueil-Malmaison (FR)**

(72) Inventeurs:
• **Lermite, Christophe
F-97435 Saint Gilles les Hauts (FR)**

• **Rojey, Alexandre
F-92500 Rueil Malmaison (FR)**
• **Larue, Joseph
F-78240 Chambourcy (FR)**

(74) Mandataire: **Andreeff, François
INSTITUT FRANCAIS DU PETROLE
4, avenue de Bois-Préau
92506 Rueil-Malmaison Cédex (FR)**

(56) Documents cités:
FR-A- 2 311 571        FR-A- 2 680 200
US-A- 2 725 342

## Description

L'invention concerne un procédé de déshydratation et/ou dessalage et de fractionnement simultané d'un effluent de gisement pétrolier contenant de l'huile, du gaz associé et de l'eau pouvant être salée.

Le traitement d'un effluent de gisement pétrolier comprend généralement une étape de fractionnement huile-gaz dont le but est d'ajuster le point de bulle de l'huile produite de façon à la rendre thermodynamiquement stable dans les conditions de stockage.

Le traitement comprend également généralement une étape de séparation d'une phase liquide aqueuse, non miscible avec la phase huile et pouvant éventuellement être salées; en effet, une phase aqueuse est en général produite en même temps que les hydrocarbures liquides et gazeux et doit être éliminée pour satisfaire les spécifications en teneur en eau et en sel dans l'huile produite. De plus, pour réduire la teneur en sel de l'huile produite, il est souvent nécessaire de procéder à un dessalage de l'huile en mélangeant l'huile avec de l'eau douce ou de l'eau dont la salinité est inférieure à celle de l'eau produite en même temps que l'huile, puis de séparer les phases liquides d'eau et d'huile.

Le traitement peut également comprendre une étape de désacidification de l'huile produite consistant principalement en l'extraction de la majeure partie de l'hydrogène sulfuré $H_2S$ pour des raisons de toxicité et de corrosion.

Ces étapes sont en général simultanées, l'effluent de production subissant une série de détentes successives, généralement 3 ou 4, depuis la pression de sortie de puits de l'effluent jusqu'à une pression voisine de la pression atmosphérique, avec, à chaque détente, élimination ou recompression du gaz produit et élimination de la phase aqueuse par décantation avec éventuellement injection d'eau douce entre les détentes pour produire un effet de dessalage, l'effluent étant en général chauffé avant la dernière détente afin de satisfaire les spécifications en tension de vapeur et en $H_2S$ de l'huile produite et faciliter la séparation de la phase aqueuse.

Pour l'huile produite, les spécifications requises sont les suivantes:

- Pour la tension de vapeur, le critère généralement retenu est la tension de vapeur à 37,8°C exprimée en Pascals, ou Reid Vapor Pressure (RVP). Cette spécification est habituellement comprise entre 0·55-0·83 bar (8 et 12 p.s.i).

- Pour la teneur en $H_2S$, la spécification habituelle est de 60 ppm masse.

- Pour la teneur en eau, la spécification est habituellement comprise entre 0,5 et 1%.

Le gaz produit à chaque détente contient des constituants lourds ($C_4^+$) qu'il n'est pas nécessaire de retirer de l'huile pour la stabiliser. Il est souhaitable de récupérer ces constituants lourds pour les réinjecter dans l'huile, car cela augmente la quantité d'huile stabilisée produite tout en abaissant sa densité, ce qui augmente sa valeur marchande. De plus, la présence de ces constituants lourds dans le gaz produit lui confère un point de rosée hydrocarbure élevé préjudiciable à sa commercialisation.

La recompression du gaz produit à chaque détente ainsi que sa condensation partielle par refroidissement permet de récupérer une partie des constituants lourds mais entraîne un surcoût d'investissement croissant avec la puissance de compression nécessaire.

Il a été découvert que le fractionnement huile-gaz, seul ou associé à la désacidification de l'huile produite, peut être réalisé avec un haut rendement en huile et avec une économie substantielle sur la puissance de chauffe, sur la puissance de compression et sur l'encombrement de l'installation, ce qui peut être particulièrement important dans un contexte tel que celui de la production de pétrole en mer.

Il a été également découvert que l'eau qui est en général produite avec les hydrocarbures liquides et gazeux contribue favorablement au fractionnement de l'huile et du gaz.

Il a été également découvert que ces opérations de traitement peuvent être réalisées en au moins une étape de détente de moins qu'il n'est généralement pratiqué dans les opérations de fractionnement par détentes successives.

D'une manière générale, le procédé de déshydratation et/ou dessalage et de fractionnement simultané d'un effluent de gisement pétrolier contenant de l'huile, du gaz associé et de l'eau pouvant être salée est caractérisé en ce qu'il comprend:

(a) au moins une étape de séparation des phases liquides et gazeuse à la pression P1 d'évacuation du gaz, produisant d'une part une fraction gazeuse G1 qui est évacuée et d'autre part, une fraction liquide L1 qui est envoyée à l'étape (b);

(b) au moins une étape de séparation au moins partielle des deux phases liquides en mélange dans la fraction liquide L1, la phase aqueuse étant partiellement évacuée et la phase huile contenant une quantité de phase aqueuse résiduelle étant envoyée à l'étape (c);

(c) au moins une étape de distillation opérée à une pression P2 inférieure ou au plus égale à la pression P1 de l'étape (a), dans une zone de distillation C1, ladite distillation étant effectuée en présence de la phase huile provenant de l'étape (b), ladite zone C1 comportant une zone d'échange de chaleur interne et une zone de rebouillage, et permettant de recueillir d'une part une fraction gazeuse G2 et d'autre part une fraction liquide L2, ladite fraction L2 étant constituée d'une phase liquide d'huile et d'une phase liquide aqueuse non miscible avec la phase liquide d'huile; et

(d) au moins une étape de séparation des deux phases liquides en mélange dans la fraction liquide L2, la phase huile étant envoyée dans ladite zone d'échange interne, puis évacuée.

Il a en effet été découvert que la mise en oeuvre d'une zone d'échange de chaleur interne permet une économie substantielle sur la chaleur à apporter au rebouilleur de la zone de distillation C1.

Il a été également découvert que, dans le cas où l'effluent traité contient un gaz acide et en particulier $H_2S$, il est possible de satisfaire aux deux spécifications de stabilité thermodynamique et de teneur en $H_2S$ en jouant sur la température du rebouilleur et sur le nombre d'étages de l'étape de distillation. En particulier, la présente invention permet grâce au pouvoir séparateur de la distillation d'éliminer $H_2S$ jusqu'à la spécification pour des effluents contenants jusqu'à plusieurs % masse d'$H_2S$, ceci sans perdre d'hydrocarbures supérieurs ($C_4^+$) en tête de la zone de distillation.

Il a été également découvert que la zone d'échange de chaleur interne permet de refroidir le résidu de la distillation, accroissant ainsi sa stabilité thermodynamique et économisant sur les refroidissements ultérieurs.

Il a été découvert, et c'est là l'un des principaux objets de la présente invention, que la présence d'eau dans l'effluent traité au cours de l'étape (c) du procédé selon l'invention conduit à une distillation hétéro-azéotropique qui contribue à accroître l'efficacité du fractionnement de l'huile et du gaz.

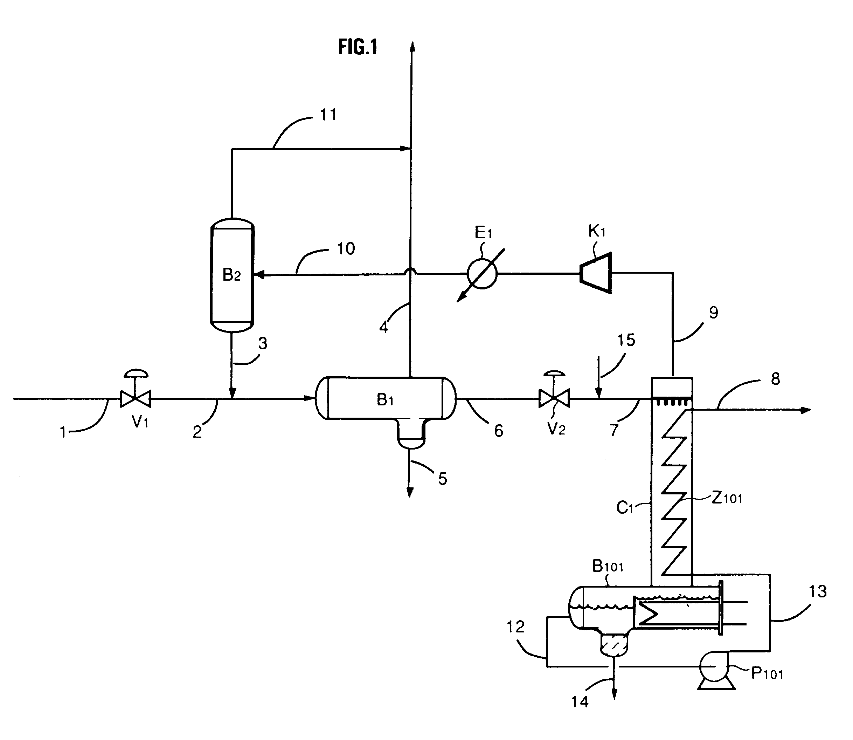

Le procédé selon l'invention est décrit plus en détail ci-après en liaison avec la Figure 1. Il s'adresse plus particulièrement au traitement d'un effluent de gisement pétrolier contenant de l'huile, du gaz associé et de l'eau pouvant être salée.

L'effluent à traiter arrive par le conduit 1. Il est détendu à la pression P1 d'évacuation du gaz (comprise par exemple entre 1 et 10 MPa) dans la vanne V1, dont il sort partiellement vaporisé par le conduit 2 et est mélangé avec une fraction liquide provenant du ballon B2 et arrivant par le conduit 3.

Les phases du mélange ainsi obtenu sont séparées dans le ballon B1. La phase gazeuse est évacuée par le conduit 4, éventuellement mélangée à une phase gazeuse provenant du ballon B2 arrivant par le conduit 11, et évacuée du procédé. La phase aqueuse est en partie évacuée du procédé par le conduit 5. La phase hydrocarbure liquide qui contient une faible fraction de la phase aqueuse non séparée (par exemple entre 1% et 5%) est évacuée par le conduit 6, puis détendue dans une vanne V2 jusqu'à une pression P2 comprise entre la pression P1 et la pression atmosphérique. La pression P2 est comprise par exemple entre 0,15 et 1 MPa.

La phase hydrocarbure sortant de la vanne V2 par le conduit 7 peut être mélangée avec une quantité d'eau douce circulant dans le conduit 15 (cette quantité d'eau peut être comprise par exemple entre 10 et 100% de la quantité d'huile circulant dans le conduit 6) afin de diminuer sa teneur en sel par effet de dilution; le mélange obtenu est introduit (étape(c)) dans la zone de distillation C1. Cette zone de distillation comprend une zone de rebouillage B101 et une zone d'échange de chaleur interne Z101, dans laquelle la phase liquide d'huile provenant de l'étape (d) et sortant de ladite zone de rebouillage B101, en remontant le long de ladite zone d'échange de chaleur interne Z101, réchauffe le liquide L1 et la vapeur circulant à contre-courant dans la zone de distillation C1. La phase aqueuse injectée par le conduit 15 peut être constituée de préférence par de l'eau douce, mais également par de l'eau dont la teneur en sel est inférieure à celle de la phase aqueuse résiduelle contenue dans la phase huile circulant dans le conduit 6 de manière à avoir un effet de dessalage.

La zone de rebouillage B101 est constituée de deux parties: dans la partie située sous la zone de distillation C1, le mélange des deux phases liquides d'huile et d'eau est porté à l'ébullition par un apport externe de chaleur, tandis que dans une partie latérale séparée par un baffle vertical et alimentée par débordement de liquide par dessus ledit baffle, les deux phases liquides d'huile et d'eau sont séparées par décantation, ce qui permet à la phase aqueuse d'être évacuée par le conduit 14, et à la phase d'huile d'être évacuée par le conduit 12 à travers la pompe P101.

La température dans la zone de rebouillage B101 est en général comprise entre 100°C et 250°C, et de préférence entre 100°C et 150°C.

Le résidu de la distillation se compose d'une phase huile et d'une phase aqueuse qui sont séparées par décantation; la phase huile est conforme aux spécifications RVP (Reid Vapor Pressure), $H_2S$ et, teneur en eau. Après remontée à travers la zone d'échange de chaleur interne Z101, la phase huile est évacuée par le conduit 8.

Le distillat vapeur est évacué par le conduit 9; il peut être au moins en partie recomprimé dans le compresseur K1, de la pression P2 à la pression P1, puis en général refroidi dans l'échangeur de chaleur E1 par un fluide externe pouvant être par exemple de l'eau, ou de l'air, ou tout autre fluide de refroidissement disponible sur le site. Cette séquence recompression-refroidissement permet de condenser une phase liquide riche en hydrocarbures supérieurs. La quantité de fraction liquide arrivant dans la zone de distillation C1 par le conduit 7 étant beaucoup plus importante que la quantité de gaz sortant par le conduit 9, la température du gaz sortant de la zone de distillation C1 par le conduit 9 est proche de la température de la fraction liquide circulant dans le conduit 7; elle est en général comprise entre 40 et 80°C.

Le mélange liquide-vapeur ainsi formé est évacué de l'échangeur de chaleur E1 vers le ballon B2 par le conduit 10. La fraction liquide constituée d'un mélange d'une phase liquide d'huile et d'une phase liquide aqueuse est évacuée du ballon B2 par le conduit 3 et mélangée à l'effluent provenant de la vanne V1 et arrivant par le conduit 2, pour être envoyée vers le ballon B1 (étape(a), comme déjà décrit précédemment. La phase liquide aqueuse obtenue après condensation à la sortie de l'échangeur E1 étant constituée d'eau pratiquement à salinité nulle puisqu'elle provient d'une condensation peut être séparée et réinjectée par le conduit 15 de manière à contribuer au processus de dessalage.

La phase vapeur est évacuée du ballon B2 par le conduit 11 et mélangée à une fraction gazeuse provenant du ballon B1 et arrivant par le conduit 4, comme déjà décrit plus haut.

La recompression de la phase gazeuse sortant en tête de la colonne C1 peut être effectuée en un ou plusieurs étages de compression; il est cependant avantageux d'effectuer cette recompression en une seule étape afin de limiter le nombre de compresseurs; dans ce but on pourra choisir la valeur de la pression P2 intermédiaire entre la pression P1 et la pression atmosphérique P0 et dans un rapport tel que par exemple P2/P0 est au moins égal à la moitié de P1/P2.

Bien entendu, la phase gazeuse G2 recomprimée à la pression P1 pourrait être mélangée à la phase gazeuse G1 et évacuée du procédé directement sans refroidissement, mais il est beaucoup plus avantageux de refroidir la phase gazeuse G2 après recompression de manière à condenser une partie de la phase G2 et , après séparation dans le ballon B2, de recycler la phase liquide ainsi obtenue vers le ballon B1comme déjà écrit précédemment.

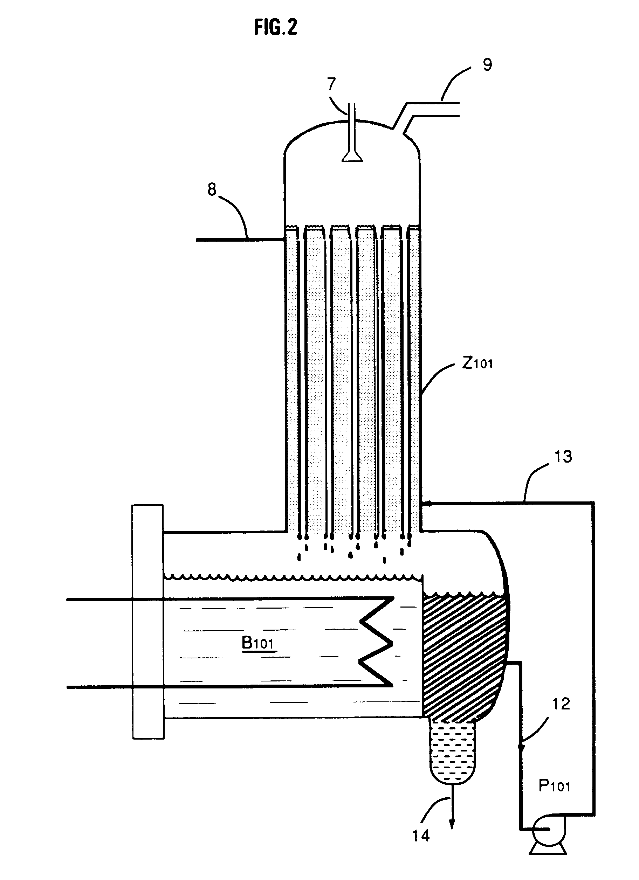

Pour réaliser l'étape (c) du procédé de l'invention, on peut opérer dans un dispositif tel que décrit ci-après en liaison avec la figure 2.

Il comprend principalement :

- Une zone de rebouillage B101, constituée d'un ballon qui comprend d'une part une capacité permettant l'immersion dans le résidu de la distillation d'un dispositif de rebouillage connu de l'homme de l'art, comme par exemple un chauffage électrique, ou une épingle de circulation d'un fluide caloporteur, ou encore un tube à feu, et, d'autre part, séparée par un baffle vertical de la capacité précédente, une zone de décantation dans laquelle les deux phases liquides d'huile et d'eau sont séparées par décantation, ce qui permet à la phase aqueuse d'être évacuée par le conduit 14 et à la phase huile d'être évacuée par le conduit 12 à travers la pompe P101; et

- Une zone d'échange de chaleur interne Z101, située au dessus de la zone de rebouillage, constituée de deux espaces de circulation; dans l'un de ces espaces s'écoule par gravité le mélange d'huile à dégazer et d'eau arrivant en tête du dispositif de distillation C1 par le conduit 7, à contre-courant de la vapeur remontant de la zone de rebouillage B101 à travers ladite zone d'échange de chaleur interne Z101, ladite vapeur étant ensuite évacuée du dispositif de distillation C1 par le conduit 9; dans l'autre espace, s'écoule de bas en haut la phase liquide d'huile sortant de la zone de rebouillage B101 par le conduit 12, à travers la pompe P101 et rentrant dans la zone d'échange de chaleur par le conduit 13, puis sortant de ladite zone d'échange de chaleur Z101 par le conduit 8.

La zone d'échange de chaleur interne Z101 peut être réalisée selon différentes configurations, dont quelques exemples sont détaillés ci-après.

Par exemple, la zone d'échange de chaleur interne Z101 peut être constituée de tubes verticaux dans lesquels le mélange d'huile à dégazer et d'eau coule en film tombant sur les parois internes des tubes tandis que la phase liquide d'huile remontant de la zone de rebouillage B101 circule à l'extérieur des tubes dans la calandre. La paroi interne desdits tubes verticaux peut être lisse, mais également présenter des aspérités, ou avoir subi un traitement de surface favorisant le transfert de matière et de chaleur entre les phases circulant à l'intérieur des tubes, ainsi que le transfert de chaleur entre les phases circulant de part et d'autre de la paroi des tubes. Par exemple, la surface interne des tubes pourra avoir une géométrie favorisant l'apparition de vagues au sein du film de liquide tombant, ou bien présenter des canelures dans l'axe des tubes de manière à augmenter la surface interne de ceux-ci, ou bien pourra être enduite d'un dépôt de particules solides agglomérées favorisant la nucléation de bulles de vapeur au sein du film de liquide tombant. La paroi interne des tubes est préférentiellement mouillée par la phase huile.

Lesdits tubes verticaux peuvent également être remplis de garnissage en vrac comme par exemple des billes, des anneaux ou des selles. De préférence, la plus grande dimension d'un élément de garnissage sera inférieure au huitième du diamètre desdits tubes.

Lesdits tubes verticaux peuvent également être remplis de garnissage structuré constitués par exemple de toile métallique, de tricot métallique, de plaques ou de croisillons tels qu'utilisés par exemple dans les mélangeurs statiques.

Une autre configuration possible consiste à opérer sur la surface externe des tubes le contact entre le mélange d'huile à dégazer et d'eau et la vapeur remontant de la zone de rebouillage B101 par la calandre, la phase liquide d'huile remontant, à travers la pompe P101, de la zone de rebouillage B101 par l'intérieur des tubes. Dans ce cas, la calandre peut être vide ou remplie de garnissage en vrac ou structuré. Dans ce cas également, la surface externe des tubes peut être lisse ou présenter des aspérités, ou avoir subi un traitement de surface favorisant le transfert de matière et de chaleur entre les phases circulant à l'extérieur des tubes, ainsi que le transfert de chaleur entre les phases circulant de part et d'autre de la paroi des tubes. La paroi externe des tubes est préférentiellement mouillée par la phase huile.

La zone d'échange de chaleur interne Z101 peut également avoir une structure telle que les deux espaces de circulation soient délimités par un ensemble de plaques verticales.

Le dispositif de distillation C1 pourra également comprendre un dispositif de répartition du mélange d'huile à dégazer et d'eau dans l'espace de circulation correspondant de la zone d'échange de chaleur interne Z101 lorsque cet espace est multiple (par exemple constitué de tubes). De tels dispositifs sont connus de l'homme de l'art.

L'exemple suivant illustre l'invention.

EXEMPLE

Dans cet exemple, on procède selon le schéma représenté sur la Figure 1. L'effluent à traiter, qui est un pétrole brut sortant du puits de production, arrive par le conduit 1 sous un débit de 169,3 tonne/h dont 31,1 tonne/h d'eau libre; sa température est de 60°C, sa pression est de 30 MPa. Il est détendu jusqu'à la pression P1 de 3 MPa dans la vanne V1, d'où il ressort par le conduit 2 à la température de 37°C. Il est ensuite mélangé à un liquide L3 provenant du ballon B2 par le conduit 3 sous un débit de 2,15 tonne/h, dont 155 kg/h d'eau libre; ce liquide est à une température de 35°C et à une pression 3 MPa. Le mélange ainsi obtenu est envoyé dans le ballon B1 où la phase gazeuse est totalement séparée des phases liquides, lesquelles sont partiellement séparées. La phase gazeuse G1 est évacuée par le conduit 4 sous un débit de 72,1 tonne/h; le liquide L1, formé d'une phase hydrocarbure majoritaire et d'une phase aqueuse minoritaire, est évacuée par le conduit 6 vers la vanne V2 sous un débit de 68,5 tonne/h, dont 321 kg/h de phase aqueuse; la phase liquide aqueuse est évacuée du procédé par le conduit 5 sous un débit de 30,88 tonne/h. Dans la vanne V2, la phase liquide L1 est détendue jusqu'à une pression P2 de 1 MPa et partiellement vaporisée, puis mélangée à une phase liquide aqueuse L4 de salinité très inférierue à la saturation, arrivant par le conduit 15 sous un débit de 2583 kg/h. Les phases liquides et la phase vapeur ainsi obtenues sont à la température de 32°C et entrent par le conduit 7 dans la zone de distillation C1 qui comprend une zone d'échange de chaleur interne Z101 et une zone de rebouillage B101. La température dans le rebouilleur B101 est de 132°C. La zone d'échange de chaleur interne Z101 est constituée de tubes verticaux dans lesquels l'huile à dégazer coule en films tombants sur les parois internes des tubes. La phase liquide hydrocarbure anhydre L2 sortant de la zone de rebouillage B101 à travers la pompe P101 à 132°C est retournée dans la zone d'échange de chaleur interne Z101, dans laquelle elle circule à l'extérieur des tubes, puis elle est évacuée en tête de la zone de distillation C1 par le conduit 8 à 62°C, sous un débit de 50,9 tonne/h. La phase aqueuse est totalement décantée dans le rebouilleur B101 et évacuée du procédé par le conduit 14 sous un débit de 2736 kg/h. La phase vapeur G2 est évacuée de la tête de la zone de distillation C1 par le conduit 9 sous un débit de 17,45 tonne/h à la température de 53°C.

Sortant de la zone de distillation C1 par le conduit 9, la phase gazeuse G2 entre dans le compresseur K1, dont la puissance est de 520 kW, d'où elle ressort à la pression de 3 MPa et à la température de 110°C et entre dans l'échangeur de chaleur E1. Dans l'échangeur de chaleur E1, la phase gazeuse G2 est refroidie à 35°C par de l'eau de refroidissement extérieure au procédé, ce refroidissement entraînant la condensation d'une fraction du gaz sous forme d'un liquide L3. Le mélange est évacué de l'échangeur de chaleur E1 par le conduit 10 et envoyé dans le ballon B2, dans lequel la phase gazeuse est séparée des phases liquides. Le liquide L3 formé des phases liquides hydrocarbure et aqueuse est mélangé au fluide provenant de la vanne V1 par le conduit 2, la phase gazeuse est évacuée par le conduit 11 et mélangée à la phase gazeuse G1 circulant dans le conduit 4, et la phase gazeuse résultant de ce mélange est évacuée à la température de 36°C avec un débit de 87,4 tonne/h.

Il a été déclaré plus haut que la présence d'eau dans l'effluent traité au cours de l'étape (c) du procédé selon l'invention conduit à une distillation hétéro-azéotropique qui contribue à accroître l'efficacité du fractionnement de l'huile et du gaz. Ceci est confirmé par la comparaison suivante : si dans l'exemple ci-dessus, les phases liquides hydrocarbures et aqueuses sont totalement séparées dans le ballon B1, et si l'arrivée de la phase liquide aqueuse L4 par le conduit 15 est supprimée, le liquide L1 entrant dans la zone de distillation C1 est anhydre; pour une même spécification de l'huile produite et une même température dans le rebouilleur B101, la pression dans la zone de distillation C1 doit alors être abaissée à 716 kPa, et la puissance du compresseur K1 est augmentée jusqu'à 690 kW.

**Revendications**

1. Procédé de déshydratation et/ou dessalage et de fractionnement simultané d'un effluent de gisement pétrolier contenant de l'huile, du gaz associé et de l'eau pouvant être salée caractérisé en ce qu'il comprend:

(a) au moins une étape de séparation des phases liquides et gazeuse à la pression P1 d'évacuation du gaz, produisant d'une part une fraction gazeuse G1 qui est évacuée et d'autre part, une fraction liquide L1 qui est envoyée à l'étape (b);

(b) au moins une étape de séparation au moins partielle des deux phases liquides en mélange dans la fraction liquide L1, la phase aqueuse étant partiellement évacuée et la phase huile contenant une quantité de phase aqueuse résiduelle étant envoyée à l'étape (c),

(c) au moins une étape de distillation opérée à une pression P2 inférieure ou au plus égale à la pression P1 de l'étape (a), dans une zone de distillation C1, ladite distillation étant effectuée en présence de la phase huile provenant de l'étape (b), ladite zone C1 comportant une zone d'échange de chaleur interne et une zone de rebouillage, et permettant de recueillir d'une part une fraction gazeuse G2 et d'autre part une fraction liquide L2, ladite fraction L2 étant constituée d'une phase liquide d'huile et d'une phase liquide aqueuse non miscible avec la phase liquide d'huile,

(d) au moins une étape de séparation des deux phases liquides en mélange dans la fraction liquide L2, la phase huile étant envoyée dans ladite zone d'échange interne, puis évacuée.

2. Procédé selon la revendication 1 caractérisé en ce que l'étape (c) est réalisée à une pression P2 intermédiaire entre la pression P1 à laquelle est opérée l'étape (a) et la pression atmosphérique P0, le rapport P2/P0 étant au moins égal à la moitié du rapport P1/P2.

3. Procédé selon l'une quelconque des revendications 1 à 2 caractérisé en ce qu'une fraction aqueuse est ajoutée au mélange provenant de l'étape (b) avant son entrée dans l'étape (c).

4. Procédé selon la revendications 3 caractérisé en ce que la fraction aqueuse ajoutée au mélange provenant de l'étape (b) avant son entrée dans l'étape (c) a une concentration en sel inférieure à celle qui existe dans la phase aqueuse résiduelle provenant de l'étape (b).

5. Procédé selon l'une quelconque des revendications 1 à 4 caractérisé en ce que la fraction gazeuse G2 est recomprimée, puis refroidie et au moins en partie condensée, la fraction liquide obtenue étant un mélange d'une phase d'hydrocarbures et d'une phase aqueuse qui sont séparées, la phase d'hydrocarbures étant recyclée vers l'étape (a).

6. Procédé selon la revendication 5 caractérisé en ce que la fraction aqueuse additionnée selon la revendication 3 provient au moins en partie de la phase aqueuse obtenue par condensation partielle de la phase gazeuse G2.

7. Procédé selon l'une quelconque des revendications 1 à 6 caractérisé en ce que la température de rebouillage de la distillation de l'étape (c) est comprise entre 100°C et 150°C.

8. Procédé selon l'une quelconque des revendications 1 à 7 caractérisé en ce que la température d'évacuation de la fraction gazeuse G2 en tête de la zone de distillation C1 est comprise entre 40 et 80°C.

9. Procédé selon l'une quelconque des revendications 1 à 8 caractérisé en ce que la phase huile provenant de la fraction liquide L2 circule de bas en haut dans la zone d'échange interne de chaleur, globalement à contre-courant de la fraction liquide L1, qui descend dans la zone de dsitillation.

10. Procédé selon l'une quelconque des revendications 1 à 9 caractérisé en ce que ladite étape de distillation (c) est réalisée dans une zone de distillation C1 comportant une zone d'échange de chaleur interne comprenant deux espaces de circulation constitués de tubes verticaux et d'une calandre entourant lesdits tubes.

11. Procédé selon la revendication 10 caractérisé en ce que le mélange des deux phases formant la fraction liquide L1 s'écoule en film tombant dans les tubes.

12. Procédé selon la revendication 11 caractérisé en ce que la phase huile circule de bas en haut sur la paroi externe des tubes.

13. Procédé selon l'une quelconque des revendications 11 et 12 caractérisé en ce que le mélange des deux phases formant la fraction liquide L1 s'écoule à l'intérieur de tubes verticaux remplis d'un garnissage.

14. Procédé selon la revendication 10 caractérisé en ce que le mélange des deux phases formant la fraction liquide L1 s'écoule en film tombant à l'extérieur des tubes.

15. Procédé selon la revendication 14 caractérisé en ce que la phase huile circule de bas en haut sur la paroi interne des tubes.

16. Procédé selon l'une quelconque des revendications 14 et 15 caractérisé en ce que le mélange des deux phases formant la fraction liquide L1 s'écoule dans la calandre remplie d'un garnissage.

17. Procédé selon l'une quelconque des revendications 1 à 9 caractérisé en ce que ladite étape de distillation (c) est réalisée dans une zone de distillation C1 comportant une zone d'échange de chaleur interne comprenant deux espaces de circulation délimités par un ensemble de plaques verticales.

18. Appareillage pour réaliser les étapes (c) et (d) du procédé selon l'une des revendications 1 à 17 comprenant une zone de rebouillage surmontée par une zone de distillation et caractérisé en ce que

- ladite zone de rebouillage est constituée d'un ballon qui comprend, d'une part, une capacité permettant l'immersion dans le résidu de la distillation d'un dispositif de rebouillage et, d'autre part, séparée par un baffle vertical de la capacité précédente, une zone de décantation adaptée à la séparation d'une phase liquide d'huile et d'une phase liquide aqueuse, des moyens d'évacuation de ladite phase aqueuse et des moyens d'évacuation de ladite phase liquide d'huile à travers une pompe ;
- et en ce que ladite zone de distillation comprend une zone d'échange de chaleur interne constituée de deux espaces de circulation;

  - l'un desdits espaces de circulation étant adapté à l'écoulement par gravité du mélange d'huile à dégazer et d'eau arrivant en tête de ladite zone de distillation, à contrecourant de la vapeur remontant de la zone de rebouillage, à travers ladite zone d'échange de chaleur interne, et étant adapté à l'évacuation de ladite vapeur en tête de ladite zone de distillation et d'échange de chaleur ;
  - l'autre espace de circulation étant adapté à l'écoulement de bas en haut de la phase liquide d'huile sortant de la zone de rebouillage à travers la pompe et rentrant dans la zone d'échange de chaleur et étant adapté à l'évacuation de ladite phase liquide d'huile en tête de ladite zone de distillation et d'échange de chaleur.

**Patentansprüche**

1. Verfahren zur Dehydratisierung und/oder Entsalzung und gleichzeitiger Fraktionierung eines Erdöllagerstättenabstroms, der Öl, zugehöriges Gas und gegebenenfalls salziges Wasser enthält, dadurch gekennzeichnet, daß es umfaßt:

   (a) wenigstens eine Stufe zur Trennung der flüssigen und gasförmigen Phasen beim Gasabzugsdruck P1, derart, daß einerseits eine gasförmige Fraktion G1, die abgezogen wird und andererseits eine flüssige Fraktion L1, die zur Stufe (b) geschickt wird, erzeugt wird;

   (b) wenigstens eine Stufe zur wenigstens teilweisen Trennung der beiden flüssigen Phasen im Gemisch in der flüssigen Fraktion L1, wobei die wässrige Phase partiell abgezogen wird und die Ölphase, die eine Menge an wässriger Restphase enthält, zur Stufe (c) geleitet wird;

   (c) wenigstens eine Destillationsstufe, die bei einem Druck P2 kleiner oder gleich dem Druck P1 der Stufe (a) in einer Destillationszone C1 betrieben wird, wobei diese Destillation in Anwesenheit der aus der Stufe (b) stammenden Ölphase durchgeführt wird, diese Zone C1 eine innere Wärmeaustauscherzone und eine Abkochzone umfaßt und es ermöglicht, einerseits eine gasförmige Fraktion G2 und andererseits eine flüssige Fraktion L2 zu sammeln, wobei diese Fraktion L2 gebildet wird aus einer flüssigen ölförmigen Phase und einer flüssigen wässrigen Phase, die mit der flüssigen Ölphase nicht mischbar ist, und

   (d) wenigstens eine Stufe zur Trennung der beiden flüssigen Phasen im Gemisch in der flüssigen Fraktion L2, wobei die ölförmige Phase in diese Zone des inneren Wärmeaustausches geleitet und dann abgezogen wird.

2. Verfahren nach Anspruch 1, dadurch gekennzeichnet, daß die Stufe (c) bei einem Druck P2 zwischen dem Druck P1, bei der die Stufe (a) betrieben wird und dem atmosphärischen Druck P0 realisiert wird, wobei das Verhältnis P2/P0 wenigstens gleich der Hälfte des Verhältnisses P1/P2 ist.

3. Verfahren nach einem der Ansprüche 1 bis 2, dadurch gekennzeichnet, daß eine wässrige Fraktion dem aus der Stufe (b) stammenden Gemisch vor seinem Eintritt in die Stufe (c) zugesetzt wird.

4. Verfahren nach Anspruch 3, dadurch gekennzeichnet, daß die zugesetzte wässrige dem aus der Stufe (b) stammenden Gemisch vor ihrem Eintritt in die Stufe (c) zugesetzte Fraktion eine Konzentration aus Salz hat, die kleiner ist als die, die in der aus der Stufe (b) stammenden wässrigen Restphase existiert.

5. Verfahren nach einem der Ansprüche 1 bis 4, dadurch gekennzeichnet, daß die gasförmige Fraktion G2 rekomprimiert, dann gekühlt und wenigstens zum Teil kondensiert wird, wobei die erhaltene flüssige Fraktion ein Gemisch einer Phase aus Kohlenwasserstoffen und einer wässrigen Phase, die voneinander getrennt werden, ist, wobei die Kohlenwasserstoffphase zur Stufe (a) im Kreislauf rückgeführt wird.

6. Verfahren nach Anspruch 5, dadurch gekennzeichnet, daß die wässrige gemäß Anspruch 3 zugegebene Fraktion wenigstens zum Teil aus der wässrigen Phase stammt, die durch partielle Kondensation der gasförmigen Phase G2 erhalten wurde.

7. Verfahren nach einem der Ansprüche 1 bis 6, dadurch gekennzeichnet, daß die Kochtemperatur der Destillation der Stufe (c) zwischen 100°C und 150°C liegt.

8. Verfahren nach einem der Ansprüche 1 bis 7, dadurch gekennzeichnet, daß die Abzugstemperatur der gasförmigen Phase G2 am Kopf der Destillationszone C1 zwischen 40 und 80°C liegt.

9. Verfahren nach einem der Ansprüche 1 bis 8, dadurch gekennzeichnet, daß die ölförmige aus der flüssigen Fraktion L2 stammende Phase von unten nach oben in der inneren Wärmeaustauscherzone, allgemein im Gegenstrom zur flüssigen Phase L1, die in der Destillationszone nach unten geht, zirkuliert.

10. Verfahren nach einem der Ansprüche 1 bis 9, dadurch gekennzeichnet, daß die Destillationsstufe (c) in einer Destillationszone C1 realisiert wird, die eine innere Wärmeaustauscherzone umfaßt, welche zwei Zirkulationsräume aufweist, die aus vertikalen Rohren sowie einen diese Rohre umschließenden Kalander, gebildet sind.

11. Verfahren nach Anspruch 10, dadurch gekennzeichnet, daß das Gemisch der beiden die flüssige Fraktion L1 bildenden Phasen im fallenden Film in den Rohren fließt.

12. Verfahren nach Anspruch 11, dadurch gekennzeichnet, daß die ölförmige Phase von unten nach oben auf der Außenwand der Rohre zirkuliert.

13. Verfahren nach einem der Ansprüche 11 und 12, dadurch gekennzeichnet, daß das Gemisch der beiden die flüssige Fraktion L1 bildenden Phasen im Inneren der vertikalen mit einer Füllung oder Auskleidung gefüllten Rohren strömt.

14. Verfahren nach Anspruch 10, dadurch gekennzeichnet, daß das Gemisch der beiden die flüssige Fraktion L1 bildenden Phasen im fallenden Film außerhalb der Rohre strömt.

15. Verfahren nach Anspruch 14, dadurch gekennzeichnet, daß die ölphase von unten nach oben auf der Innenwand der Rohre zirkuliert.

16. Verfahren nach einem der Ansprüche 14 und 15, dadurch gekennzeichnet, daß das Gemisch der beiden die flüssige Fraktion L1 bildenden Phasen in dem mit einer Füllung versehenen Kalander strömt.

17. Verfahren nach einem der Ansprüche 1 bis 9, dadurch gekennzeichnet, daß diese Destillationsstufe (c) in einer Destillationszone C1, die eine innere Wärmeaustauscherzone umfaßt, realisiert wird, welche zwei durch eine Anordnung vertikaler Platten begrenzte Zirkulationsräume umfaßt.

18. Apparat zur Realisierung der Stufen (c) und (d) des Verfahrens nach einem der Ansprüche 1 bis 17, eine Abkochzone umfassend, die von einer Destillationszone überlagert wird und dadurch gekennzeichnet, daß

- diese Abkochzone gebildet wird durch einen Ballon, der einerseits einen Behälter umfaßt, der das Eintauchen in den Rest der Destillation einer Abkochvorrichtung ermöglicht und andererseits, getrennt durch ein vertikales Baffle von dem vorhergehenden Behälter eine Dekantierungszone, die für die Trennung einer flüssigen ölphase und einer flüssigen wässrigen Phase geeignet ist, sowie Mittel zum Abzug der wässrigen Phase, sowie Mittel zum Abzug dieser flüssigen ölphase vermittels einer Pumpe;

- und daß diese Destillationszone eine innere Wärmeaustauscherzone, bestehend aus zwei Zirkulationsräumen umfaßt;

- wobei einer dieser Zirkulationsräume für die Schwerkraftströmung des zu entgasenden Gemisches und des Wassers, das am Kopf dieser Destillationszone ankommt, im Gegenstrom zu dem aus der Kochzone aufsteigenden Dampf durch diese innere Wärmeaustauscherzone eingerichtet ist und für den Abzug dieses Dampfs am Kopf dieser Destillations- und Wärmeaustauscherzone ausgelegt ist;

- wobei der andere Zirkulationsraum zur Strömung von unten nach oben der flüssigen aus der Abkochzone austretenden ölphase vermittels der Pumpe ausgelegt ist und in die Wärmeaustauscherzone wieder eintritt und für den Abzug dieser flüssigen ölphase am Kopf dieser Destillations- und Wärmeaustauscherzone ausgelegt ist.

**Claims**

1. A process for dehydration and/or desalination and simultaneous fractionation of a petroleum deposit effluent containing oil, associated gas and water which can be saline, characterised in that the process comprises :

    (a) at least one step where the liquid phases and gaseous phase are separated at the pressure P1 for removal of the gas, producing, on the one hand, a gaseous fraction G1 which is removed, and, on the other hand, a liquid fraction L1 which is sent to step (b) ;

(b) at least one step where the two liquid phases mixed in the liquid fraction L1 are at least partly separated, the aqueous phase being partly removed and the oil phase which contains a residual quantity of aqueous phase being sent to step (c) ,

(c) at least one distillation step which is carried out at a pressure P2 which is less than or at the most equal to the pressure P1 in step (a), in a distillation zone C1, said distillation being carried out in the presence of the oil phase coming from step (b), said zone C1 comprising an internal heat exchange zone and a boiling zone, and enabling a gaseous fraction G2 to be collected, on the one hand, and a liquid fraction L2 to be collected, on the other hand, said fraction L2 being constituted by a liquid oil phase and an aqueous liquid phase which is not miscible with the liquid oil phase,

(d) at least one step for separating the two liquid phases which are mixed in the liquid fraction L2, the oil phase being sent to said internal exchange zone, and then removed.

2. A process according to Claim 1, characterised in that step (c) is carried out at a pressure P2 which is intermediate between the pressure P1 at which step (a) is carried out and atmospheric pressure P0, the P2/P0 ratio being at least equal to half the P1/P2 ratio.

3. A process according to any one of Claims 1 and 2, characterised in that an aqueous fraction is added to the mixture coming from step (b) before it enters step (c).

4. A process according to Claim 3, characterised in that the salt concentration of the aqueous fraction added to the mixture from step (b) before it enters step (c) is less than that which exists in the residual aqueous ohase coming from step (b).

5. A process according to any one of Claims 1 to 4, characterised in that the gaseous fraction G2 is recompressed, then cooled and at least partly condensed, the liquid fraction obtained being a mixture of a hydrocarbon phase and of an aqueous phase, which are separated, the hydrocarbon phase being recycled towards step (a).

6. A process according to Claim 5, characterised in that the aqueous fraction added according to Claim 3 comes, at least partly, from the aqueous phase obtained by partial condensation of the gaseous phase G2.

7. A process according to any one of Claims 1 to 6, characterised in that the boiling temperature for the distillation in step (c) is between 100°C and 150°C.

8. A process according to any one of Claims 1 to 7, characterised in that the temperature for removing the gaseous faction G2 at the top of the distillation zone CI is between 40 and 80°C.

9. A process according to any one of Claims 1 to 8, characterised in that the oil phase coming from the liquid fraction L2 circulates upstream in the internal heat exchange zone, substantially countercurrent to the liquid fraction L1 which flows down in the distillation zone.

10. A process according to any one of Claims 1 to 9, characterised in that said distillation step (c) is carried out in a distillation zone C1 comprising an internal heat exchange zone comprising two circulation spaces constitued by vertical tubes and a shell which surrounds said tudes.

11. A process according to Claim 10, characterised in that the mixture of the two phases which form the liquid fraction L1 flows in the form of a falling film in the tubes.

12. A process according to Claim 11, characterised in that the oil phase circulates upstream along the inner wall of the tubes.

13. A process according to any one of Claims 11 and 12, characterised in that the mixture of the two phases which form the liquid fraction L1 flows in the vertical tubes filled with a packing.

14. A process according to Claim 10, characterised in that the mixture of the two phases which form the liquid fraction L1 flows in the form of a falling film outside the tubes.

15. A process according to Claim 14, characterised in that the oil phase circulates upstram along the outer wall of the tubes.

16. A process according to Claim 14, characterised in that the mixture of the two phases which form the liquid fraction L1 flows in the shell filled with a packing.

17. A process according to any one of Claims 1 to 9, characterised in that said distillation step (c) is carried out in a distillation zone C1 comprising an internal heat exchange zone comprising two circulation spaces are delimited by an assembly of vertical plates.

18. An apparatus for carrying out steps (c) and (d) of the process according to one of Claims 1 to 17 comprising a boiling zone overtopped by a distillation zone and characterised in that

- said boiling zone is constituted by a flask comprising, on the one hand, a capacity that enables a boiling device to be immersed in the distillation residue and, on the other hand, separated from the preceding capacity by a vertical baffle, a decantation zone designed for separating a liquid oil phase and an aqueous liquid phase, means for removing said aqueous phase and means for removing said liquid oil phase, through a pump ;

- and in that said distillation zone comprises an internal heat exchange zone constitued by two circulation spaces ;

  - one of said circulation spaces being designed for the flowing by gravity of the mixture of oil to be degassed and water, which comes to the head of said distillation zone, countercurrent to the vapour that rises from the boiling zone, through said internal heat exchange zone, and being designed for removing said vapour at the head of said distillation + heat exchange zone ;

  - the other circulation space being designed for the upstream flowing of the liquid oil phase coming from the boiling zone through the pump and entering the heat exchange zone and being designed for removing said liquid oil phase at the head of said distillation + heat exchange zone.

**FIG.1**

EP 0 605 322 B1

# FIG.2